# EUROPEAN PATENT SPECIFICATION

(11) **EP 4 396 469 B1**
(45) Date of publication and mention of the grant of the patent: **14.01.2026**
(21) Application number: 22953376.5
(22) Date of filing: 17.10.2022
(51) Int. Cl.: F16D 23/02, F16D 23/04, B65H 75/24

(54) **FRICTION RING**
REIBRING
BAGUE DE FROTTEMENT

(43) Date of publication of application: 10.07.2024
(73) Proprietor: Reymak Makine Sanayi ve Ticaret Anonim Sirketi, 45030 Kecilikoy Osb/Yunusemre, Manisa (TR)
(72) Inventor: ERZI, Ersan, Yunusemre/Manisa (TR)
(74) Representative: Yamankaradeniz, Kemal
(86) International application number: PCT/TR2022/051150
(87) International publication number: WO 2024/085817

(56) References cited:
- EP-B1- 2 985 253
- WO-A1-2011/086106
- JP-B2- 5 590 456
- KR-B1- 100 709 106
- KR-B1- 101 232 728
- KR-B1- 102 248 117
- US-A1- 2019 291 996

## Description

### Technical Field

The invention relates to a friction ring used for gripping paper, plastic and steel bobbins in the packaging industry.

### Prior Art

Friction rings are used in the packaging industry to grip paper, plastic and steel bobbins. In general, materials such as paper are wound on a cylindrical paper tube and the bobbins are fixed on friction rings while the said materials are wound on paper, plastic, steel bobbins through an automatic production line or when unwinding and/or using the wound material for further processing.

The friction rings used in the present technique are traditionally comprised of closed circuit body and ring form. These closed-circuit friction rings cause difficulty in use due to the contact of the paper bobbin dust on which it works during operation with the inside parts of the springs located between the synchronous ring and the body. In order to clean the paper bobbin dust, the friction ring is completely disassembled and the dust underneath the flat springs is cleaned with compressed air. Therefore, this leads to losses in labor and time. Another problem of the presently used friction rings is that the springs that provide tension on the balls that enable the roller to rotate are located on the body. Because of this, rings with a single or double row of springloaded balls must be produced and used separately according to the spring positioning. This is a situation that causes difficulties in production. In addition to this, steel flat springs are changed at certain time intervals. For this reason, a need has arisen to eliminate the problems experienced in friction rings in the present state of the art.

The document KR102154783B1 can be shown as an example of the known state of the art that was found in the research conducted in the literature. The said document relates to a friction ring with increased durability. In the said invention, at least one ball bearing is placed between the inner circumferential surface of the lug housing and the inner circumferential surface of the lug housing and the outer circumferential surface of the rotating shaft, so that the outer circumferential surface of the rotary shaft, the inner circumferential surface of the flange socket and the outer circumferential surface of the rotary shaft rotate independently of each other.

Here, the friction ring rotates with the piston housing. The said friction ring is resistant to abrasion and prevents damages such as tearing of sheet products by stopping the rotation of the paper tube in cases where wrapping of paper products is difficult due to tangling and similar reasons.

Another result of the research in the literature, a PCT patent application with the application number "WO2011086106A1" and titled "Friction ring for friction shafts, particularly for winding spools" has been found. The patent application relates to a friction ring for friction shafts, particularly for rewinding spools. However, the patent application does not mention a system that prevents damage to sensitive materials by reducing the internal friction of the system, provides flexibility of use thanks to adjustable functions, and contributes to the safe operation of the system with a mechanical restraint structure.

Another result of the research in the literature, an EP patent document with the number "EP2985253B1" and titled "Friction ring for friction shafts, particularly for rewinding spools" has been found. The patent application relates to a friction ring for friction shafts, particularly for rewinding spools. However, the patent application does not mention a system that prevents damage to sensitive materials by reducing the internal friction of the system, provides flexibility of use thanks to adjustable functions, and contributes to the safe operation of the system with a mechanical restraint structure.

Another result of the research in the literature, a Japan patent document with the application number "JP5590456B2" and titled "Winding collar" has been found. The patent application relates to an annular winding collar that receives a force and transmits the rotational force to the core. However, the patent application does not mention a system that prevents damage to sensitive materials by reducing the internal friction of the system, provides flexibility of use thanks to adjustable functions, and contributes to the safe operation of the system with a mechanical restraint structure.

Therefore, due to the presence of the problems described above and the inadequacy of the solutions to meet the needs, it is required to make an improvement in the relevant technical field.

### Purpose of the Invention

The present invention relates to a friction ring that eliminates the disadvantages mentioned above and provides some new additional advantages in the related technical field.

The main purpose of the invention is to provide a friction ring that can be cleaned without disassembly by means of its laterally open structure.

The purpose of the invention is to provide a friction ring with a long-lasting structure by means of the use of wire springs.

Another purpose of the invention is to provide a friction ring that provides ease of use.

Another purpose of the invention is to provide a friction ring that provides operation in all functions with the pre-centering option in both unidirectional and bidirectional rings, by means of the positioning of the wire springs that provide tension on the balls on the ring.

Another purpose of the invention is to provide a friction ring that can start clamping in the lower, middle and upper positions of the balls working unidirectionally and bidirectionally with a single synchronous ring.

Another purpose of the invention is to provide a friction ring that is suitable for winding tear-sensitive materials by minimizing the internal friction between the body and the synchronous ring. This is achieved with the removal of flat springs used in conventional friction rings, where the body and the synchronous ring were in permanent contact to each other and thereby created an internal friction that was not appropriate for the rewinding of tear-sensitive materials that need to be wound with very low or no air pressure applied to the friction shaft body, that carries the friciton rings. In order to achieve the objects specified above and those that may come about from the detailed description, the invention is a friction ring used for gripping paper, plastic, steel bobbins in the packaging industry, characterized by comprising;
- a body comprising a cam, a spiral spring groove and stroke determining groove on its outer surface,
- a ball that moves on the cam and locks the bobbin at the opening diameter and ensures the rotation of the bobbin,
- a synchronous ring, disposed on the body and enabling the ball to move synchronously,
- a wire spring, disposed on the inner surface of the synchronous ring that provides tension on the ball to ensure that the bobbin runs on the synchronous ring without friction.

The structural and characteristic features of the invention and all its advantages will be understood more clearly by means of the figures presented below and the detailed description written by reference to these figures. For this reason, the evaluation should be made by considering these figures and the detailed description.

### Figures to Help Understanding of the Invention

- Figure 1:: is the front view of the friction ring, which is the subject of the invention.
- Figure 2:: is the cross-sectional view of the friction ring, which is the subject of the invention.
- Figure 3:: is the detail view of the friction ring, which is the subject of the invention.
- Figure 4:: is the perspective view of the body of the friction ring, which is the subject of the invention.
- Figure 5:: is the perspective view of the synchronous ring of the friction ring, which is the subject of the invention.

### Description of Part References

- 10.: Body
- **11.**: Cam
- **12.**: Spiral spring groove
- **13.**: Stroke determining groove
- **20.**: Synchronous ring
- **30.**: Ball
- **40.**: Wire spring
- **50.**: Stroke screw
- **60.**: Spiral spring screw

### Detailed Description of the Invention

In this detailed description, the preferred configurations of the friction ring, which is the subject of the invention, are explained only for a better understanding of the subject and without causing any limiting effect.

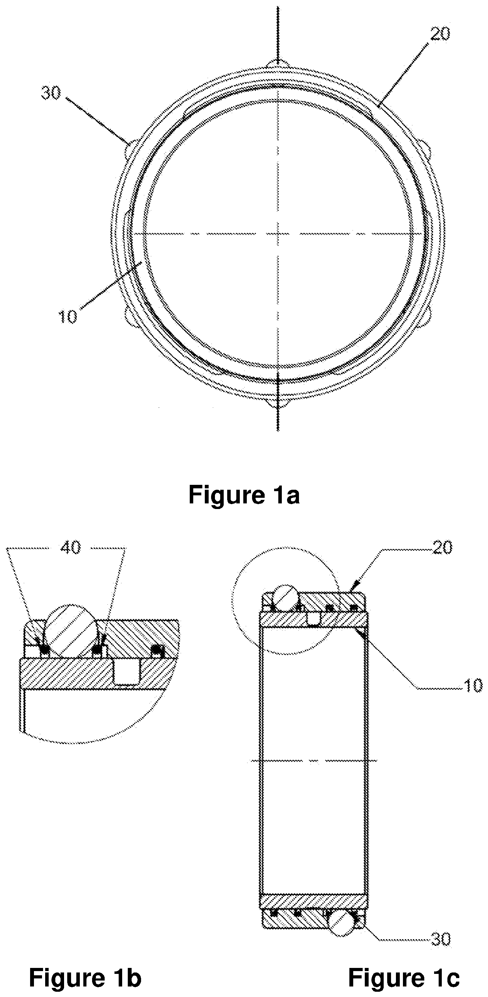

The views of the friction ring subject to the invention are given In Figures 1a, 1b and 1c. Accordingly, the friction ring in its most basic form comprises a circular body (10), a synchronous ring (20) disposed on the body (10), a ball (30) that moves on the cam (11) disposed on the outer surface of the body (10) that locks to the bobbin at a diameter somewhere between the min. and max. expanding diameters, allowing the bobbin to rotate as a unit with the friction ring, a wire spring (40) positioned on the inner surface of the synchronous ring (20) and providing tension on the ball (30) to ensure that the bobbin is fixed on the synchronous ring (20) a stroke screw (50) located on the synchronous ring (20) that restricts the movement distance by acting as a limitation on the total expanding range of the ball (30), a spiral spring screw (60) positioned in the spiral spring groove (12) on the body (10) that determines the position where the wire spring (40) will be held and that enables the synchronous ring (20) to start clamping in the lower, middle, and upper positions of the balls and enables all functions that result thereof.

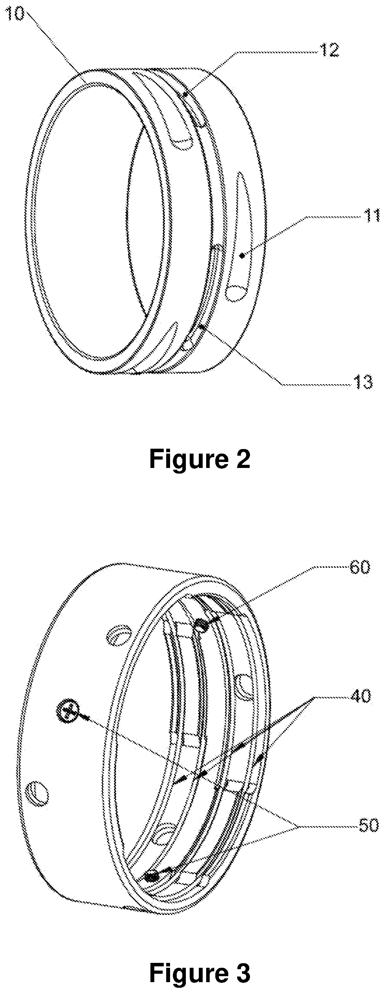

The body (10) that forms the main structure of the friction ring, which is the subject of the invention, determines the working function of the friction ring. As seen in Figure 2, there are cams (11), spiral spring groove (12) and stroke determining groove (13) on the outer surface of the body (10), which determine the total expanding range of the balls (30). The said balls (30) move on the cam (11) and fix the bobbin somewhere between the min. and max. expanding diameters and ensure the rotation of the bobbin as a unit with the friction ring.

As seen in figure 3, the wire spring (40) is placed on the inner surface of the synchronous ring (20), which enables the balls (30) to move synchronously. The said wire springs (40) provide tension on the ball (30) in order to ensure that the bobbin is fixed on the synchronous ring (20) which due to the lack of flat springs, rotates on the body with min. friction. This aims at minimizing the internal friction of the friction ring allowing very tear-sensitive materials to be wound as well.

The position where the balls (30) will be held on the cam (11) is determined by the spiral spring screw (60), which is positioned in the spiral spring groove (12) on the body (10). Thus, the synchronous ring (20) is enabled to start clamping in the lower, middle and upper position of the balls

The stroke determining groove (13) disposed on the outer surface of the body (10) serves as the stopper groove that enables the friction ring to operate between open and closed diameters.

There is a stroke screw (50) on the synchronous ring (20) that limits the stroke distance by acting as a limiter in the open and closed diameters of the balls (30).

## Claims

1. A friction ring used for gripping paper, plastic, steel bobbins in the packaging industry, **characterized by** comprising;
- a body (10) comprising a cam (11), a spiral spring groove (12) and stroke determining groove (13) on its outer surface,
- a ball (30) that moves on the cam (11) and locks the bobbin at the opening diameter and ensures the rotation of the bobbin,
- a synchronous ring (20), disposed on the body (10) and enabling the ball (30) to move synchronously,
- a wire spring (40), disposed on the inner surface of the synchronous ring (20) that provides tension on the ball (30) to ensure that the bobbin runs on the synchronous ring (20) without friction.

2. The friction ring according to claim 1 **characterized by** comprising a stroke screw (50) disposed on the said synchronous ring (20) that restricts the stroke distance by acting as a limitation on the open and closed diameters of the ball (30).

3. The friction ring according to claim 1 **characterized by** comprising a spiral spring screw (60), disposed in the spiral spring groove (12) on the said body (10) that determines the position where the ball (30) will be held, enabling the synchronous ring (20) to start clamping in the lower, middle and upper position of the ball and enable all functions resulting thereof.

## Patentansprüche

1. Reibring, der zum Greifen von Papier-, Kunststoff-, Stahlspulen in der Verpackungsindustrie verwendet wird, **gekennzeichnet durch** das Umfassen von Folgendem:
- einem Körper (10), der an seiner Außenfläche einen Nocken (11), eine spiralförmige Federnut (12) und eine Hubbestimmungsnut (13) umfasst,
- einer Kugel (30), die sich auf dem Nocken (11) bewegt und die Spule am Öffnungsdurchmesser verriegelt und die Drehung der Spule sicherstellt,
- einem Synchronring (20), der an dem Körper (10) angeordnet ist und es der Kugel (30) ermöglicht, sich synchron zu bewegen,
- einer Drahtfeder (40), die auf der Innenfläche des Synchronrings (20) angeordnet ist und eine Spannung auf der Kugel (30) bereitstellt, um sicherzustellen, dass die Spule ohne Reibung auf dem Synchronring (20) läuft.

2. Reibring nach Anspruch 1, **gekennzeichnet durch** das Umfassen einer Hubschraube (50), die auf dem Synchronring (20) angeordnet ist und den Hubweg begrenzt, indem sie als eine Begrenzung auf den offenen und geschlossenen Durchmesser der Kugel (30) wirkt.

3. Reibring nach Anspruch 1, **gekennzeichnet durch** das Umfassen einer spiralförmigen Federschraube (60), die in der spiralförmigen Federnut (12) auf dem Körper (10) angeordnet ist und die Position bestimmt, in der die Kugel (30) gehalten wird, wodurch es dem Synchronring (20) ermöglicht wird, in der unteren, mittleren und oberen Position der Kugel mit dem Klemmen zu beginnen, und alle daraus resultierenden Funktionen ermöglicht werden.

## Revendications

1. Bague de frottement utilisée pour saisir des bobines de papier, de plastique et d'acier dans l'industrie de l'emballage, **caractérisée en ce qu'**elle comprend ;
- un corps (10) comprenant une came (11), une rainure de ressort en spirale (12) et une rainure de détermination de course (13) sur sa surface extérieure,
- une bille (30) qui se déplace sur la came (11) et bloque la bobine au diamètre d'ouverture et assure la rotation de la bobine,
- une bague synchrone (20), disposée sur le corps (10) et permettant à la bille (30) de se déplacer de manière synchrone,
- un ressort en fil (40), disposé sur la surface intérieure de la bague synchrone (20) qui exerce une tension sur la bille (30) pour assurer que la bobine fonctionne sur la bague synchrone (20) sans frottement.

2. Bague de frottement selon la revendication 1, **caractérisée en ce qu'**elle comprend une vis de course (50) disposée sur ladite bague synchrone (20) qui limite la distance de course en agissant comme une limitation sur les diamètres ouvert et fermé de la bille (30).

3. Bague de frottement selon la revendication 1, **caractérisée en ce qu'**elle comprend une vis de ressort en spirale (60), disposée dans la rainure de ressort en spirale (12) sur ledit corps (10) qui détermine la position où la bille (30) sera maintenue, permettant à la bague synchrone (20) de commencer le serrage dans les positions inférieure, centrale et supérieure de la bille et de permettre toutes les fonctions qui en résultent.
